# EUROPEAN PATENT APPLICATION

(11) **EP 1 333 655 A2**
(43) Date of publication of application: **06.08.2003**
(21) Application number: 03075174.7
(22) Date of filing: 20.01.2003
(51) Int. Cl.: H04N 1/00

(54) **Retail order processing method**

(30) Priority: 31.01.2002 US 62343
(71) Applicant: EASTMAN KODAK COMPANY, Rochester, New York 14650 (US)
(72) Inventor: Sailus, Andrew, c/o Eastman Kodak Company, Rochester, New York 14650-2201 (US); McIntyre, Dale F., c/o Eastman Kodak Company, Rochester, New York 14650-2201 (US); Manico, Joseph A., c/o Eastman Kodak Company, Rochester, New York 14650-2201 (US); Mackson, Richard G., c/o Eastman Kodak Company, Rochester, New York 14650-2201 (US)
(74) Representative: Haile, Helen Cynthia

(57) **Abstract**

An order processing method. The method comprises the steps of generating an order request for an image product using an imaging device located at a retail location, the order request associated with at least one digital image accessed by a user at the imaging device; transferring the at least one digital image to a transportable transfer media; transporting the transportable transfer media from the retail location to a service fulfillment location located remotely from the retail location; fulfilling the order request to produce the image product; producing an update media; and transporting the update media and the image product to the retail location.

## Description

The present invention relates generally to photography, and more particularly to digital images and image processing.

With the increase in popularity of photography, the number and kind of merchants involved in and interested in being involved in photoprocessing has grown. In addition to photographic specialty stores and mail-order facilities providing processing options, grocery stores, drug stores and other mass merchandisers typically offer processing options through an affiliation with a wholesale or central processing laboratory. More particularly, a customer selects a drop-off envelope, fills out the drop-off envelope with name and address information, places the exposed roll of film in the drop-off envelope, and drops the envelope in a bin for pickup by personnel from the central processing laboratory. The central processing laboratory collects the envelopes from the various locations, processes the film, and returns the prints to the locations for pickup by the consumer.

With the introduction of digital cameras, the digital images captured by the digital camera do not need to be processed. Rather, the digital images are provided in electronic/digital form and are stored on a computer hard drive or on a removable media, such as a memory card or floppy disk. While a user can obtain a print of a digital image using a home printer, some home printers do not provide high quality prints.

Image producing devices (often referred to as kiosks), such as the Picture Maker™ kiosk produced by Eastman Kodak Company, accept removable media comprising digital images and provide quality prints. However, in some situations, a central processing lab is able to provide products or services, which are not available at a kiosk or by using a home computer. For example, Picture Pages™ manufactured by Eastman Kodak Company are produced at a central laboratory and not available at a kiosk. Accordingly, it may be necessary to send a digital image or several digital images to a central processing laboratory to obtain a desired product/service.

CeWe Color Group describes, in an October 2001 Photo Marketing magazine article, a method wherein an order file and image data from a customer's memory card is recorded onto a CD. The CD is then inserted, "like conventional film", in an order envelope by the retailer. Then, "two days later, the finished job (one paper print per picture, plus a CD and index print) can be picked up." While this method may have achieved a certain degree of success in its particular application, the method still requires a photofinishing envelope, the use of a CD for each customer order, the additional cost of the CD to the customer, the handling of each CD for photofinishing, and the tracking by the retailer of each CD for each customer order. As such, the use of the CD is provided as a convenience for the customer rather than as a tool for the retailer. A tool for the retailer would improve retailer efficiency and/or provide additional services/products.

Some kiosks are networked, and are therefore able to transmit a digital image to the central processing laboratory. However, many kiosks are not networked since network connections are expensive to install, operate, and maintain. Accordingly, a need exists for a method to transfer a digital image and an associated order request to a central processing laboratory for completion of the order wherein a communications network is not employed.

An object of the present invention is to provide a method to transfer at least one digital image and an associated order request which uses the at least one digital image to a central processing laboratory.

Another object of the invention is to provide such a method wherein a communications network is not employed.

These objects are given only by way of illustrative example. Thus, other desirable objectives and advantages inherently achieved by the disclosed invention may occur or become apparent to those skilled in the art. The invention is defined by the appended claims.

According to one aspect of the invention, there is provided an order processing method. The method comprises the steps of: generating an order request for an image product using an imaging device located at a retail location, the order request associated with at least one digital image accessed by a user at the imaging device; transferring the at least one digital image to a transportable transfer media; transporting the transportable transfer media from the retail location to a service fulfillment location located remotely from the retail location; fulfilling the order request to produce the image product; producing an update media; and transporting the update media and the image product to the retail location.

According to another aspect of the invention, there is provided an order processing method. The method comprises the steps of generating an order request for an image product using an imaging device located at a retail location, the order request associated with at least one digital image accessed by a user at the imaging device; transferring the at least one digital image to a transportable transfer media; transporting the transportable transfer media from the retail location to a service fulfillment location located remotely from the retail location; fulfilling the order request to produce the image product; producing an update media; transporting the update media to the retail location; and transporting the image product to a location different than the retail location.

According to yet another aspect of the invention, there is provided an order processing method. The method comprises the steps of: transporting a photographic film roll from a retail location to a service fulfillment location located remotely from the retail location to produce at least one digital image associated with the photographic film roll; generating an update media comprising the at least one digital image; transporting the update media to the retail location; accessing the at least one digital image from the update media using an imaging device located at the retail location; generating an order request for an image product using the imaging device, the order request associated with the at least one digital image; transferring the order request to a transportable transfer media; transporting the transportable transfer media from the retail location to the service fulfillment location; and fulfilling the order request to produce the image product.

According to still another aspect of the invention, there is provided an order processing method. The method comprises the steps of: transporting a photographic film roll from a retail location to a service fulfillment location located remotely from the retail location to produce at least one digital image associated with the photographic film roll; generating an update media comprising the at least one digital image; transporting the update media to the retail location; accessing the at least one digital image from the update media using an imaging device located at the retail location; generating an order request for an image product using the imaging device, the order request associated with the at least one digital image; transferring the order request to a transportable transfer media; transporting the transportable transfer media from the retail location to the service fulfillment location; fulfilling the order request to produce the image product; producing a second update media; and transporting the second update media and the image product to the retail location.

The present invention provides a method to transfer at least one digital image and an associated order request which uses the at least one digital image to a central processing laboratory for completion of the order.

The foregoing and other objects, features, and advantages of the invention will be apparent from the following more particular description of the preferred embodiments of the invention, as illustrated in the accompanying drawings.

FIG. 1 shows an image producing device for use with the method of the present invention.

FIG. 2 shows a diagram of included functions of the image producing device of FIG. 1.

FIG. 3 shows a system for use with the method of the present invention.

FIG. 4 shows a flow diagram of a method in accordance with the present invention which employs the system of FIG. 3.

FIG. 5 shows a flow diagram of another method in accordance with the present invention which employs the system of FIG. 3.

The following is a detailed description of the preferred embodiments of the invention, reference being made to the drawings in which the same reference numerals identify the same elements of structure in each of the several figures.

Since removable media (such as memory cards and floppy disks) are expensive, a consumer is unwilling to relinquish the removable media from their possession because of the concern that it will not be returned, or if returned, would be damaged. The method of the present invention does not require the user to send his/her personal removable media to a central processing laboratory.

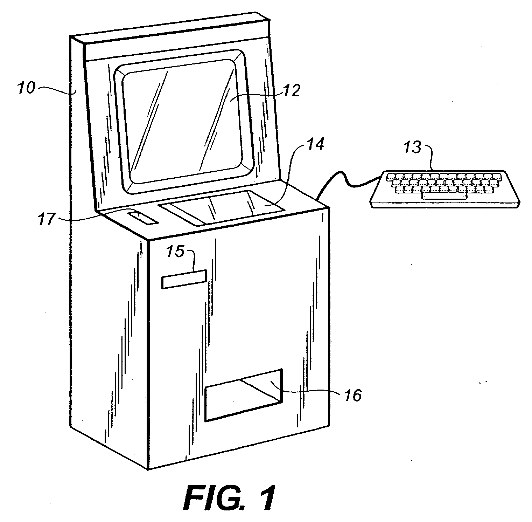

The method of the present invention employs an imaging device 10, generally illustrated in Figure 1. An example of imaging device 10 is a Picture Maker™ kiosk produced by Eastman Kodak Company. Imaging device 10 includes a color display 12 for displaying and/or receiving information to/from a user. Color display 12 can be a touchscreen display, whereby a user can provide information and data to imaging device 10, or a keyboard 13 may be employed to provide information and data. An optional scanner 14 may be provided for receiving a user-supplied visual image and converting the visual image into digital form. Alternatively, an input port 15 may be provided for receiving the user-supplied visual image in digital form, such as from a memory card, floppy disk, compact disc, or PictureCD. Imaging device 10 may optionally include a delivery section 16 for controlling the delivery of a medium, such as a print. Delivery section 16 is illustrated in Figure 1 as an opening in imaging device 10. A payment mechanism 17, such as a credit card reader, may be employed to accept payment for the product purchased.

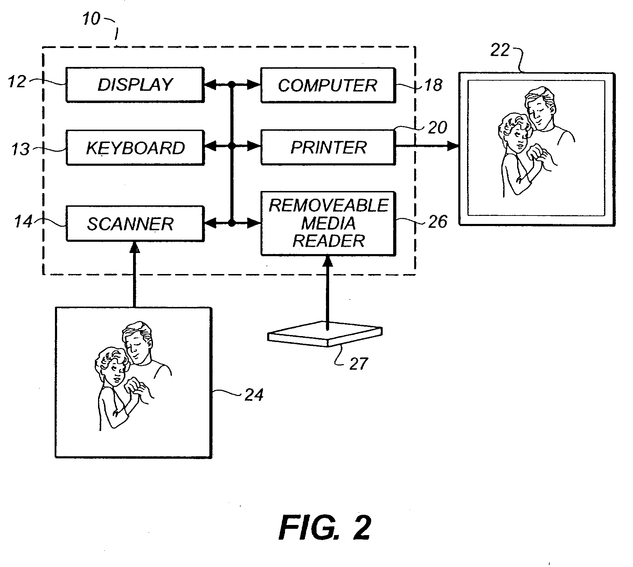

Figure 2 generally shows a diagram of included functions of imaging device 10. As illustrated, imaging device 10 includes keyboard 13 for entering information/data into a computer 18. Computer 18 typically manages the flow of information and functionality of the components of imaging device 10. Internal to imaging device 10 is a printer 20 suitable for printing a label and/or receipt (described below). Optionally, printer 20 may respond to commands of computer 18 for forming an image on a medium such as thermal or ink-jet paper. An example of an output from printer 20 is illustrated in Figure 2 at 22 which was formed from a user-supplied visual image 24 scanned using scanner 14.

As described above, if user-supplied visual image 24 is in digital form, a removable media reader 26 can receive removable media 27, for example, a memory card, floppy disk, compact disc, PictureCD, or other form of removable media used in transferring digital files.

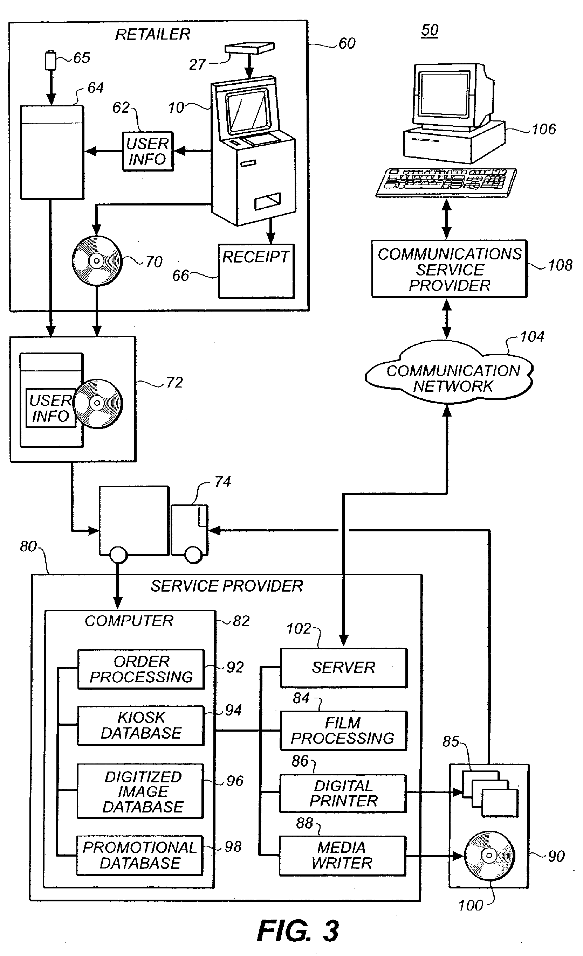

A system 50 for providing the method in accordance with the present invention is generally illustrated in Figure 3. System 50 includes a retailer 60, such as a photographic specialty store, grocery store, drug store, mass merchandiser, or other merchant at a retail location which provides photographic products or services. Retailer 60 employs imaging device 10 for receiving and collecting order requests for imaging products, for example, reprints of images, enlargements of images, tee-shirts with image imprints, and mugs with image imprints. Imaging device 10 is adapted to receive digital files from removable media 27. The digital files can include images, sound files, motion clips, and preconfigured orders. Printer 20 of imaging device 10 can produce a label 62 for attachment to a receptacle, such as a drop-off envelope 64. Preferably, label 62 includes an order identifier as well as user information, such as name and address information, and order information. Imaging device 10 can optionally provide an order receipt 66 for the user that includes the order identifier for identifying the order when the fulfilled order is returned to retailer 60 and/or imaging device 10.

Typically, drop-off envelope 64 is used to receive a roll of photosensitive film 65 for processing by a central processing laboratory. However, the method of the present invention addresses the situation wherein information is being provided in a digital file and imaging device 10 is not connected to a communications network. The digital file can be produced by scanning a visual image using scanner 14 or via removable media 27.

When employing scanner 14, the user scans the visual image to produce a digital file of the image.

When employing removable media 27, the user provides removable media 27 to imaging device 10 at retailer 60. As indicated above, removable media 27 can comprise user digital assets such as images, sound files, motion clips and/or preconfigured orders.

The user employs imaging device 10 to generate an order request using touchscreen display 12 or keyboard 13. The user also employs imaging device 10 to transfer the digital asset associated with the order request onto a transfer media 70 using a transfer device. The transfer device may be internal or external to imaging device 10.

The order request may be written to transfer media 70, reside on envelope 64, or both. An example of a preconfigured order request is a plurality of high resolution image files to be printed, or a large composite image file used in the production of a dual-sided album leaf, such as the Kodak Picture Page™ manufactured by Eastman Kodak Company.

Transfer media 70 can be a writable compact disc (CD), a ZIP disc, a writeable Digital Video Disk (DVD), a rotating magnetic media such as a JAZ media manufactured by IOMEGA Inc., or any other removable computer memory device which can comprise digital information. As will be evident, transfer media 70 is transportable.

While each transfer media 70 can comprise digital assets from a single user, preferably each transfer media 70 comprises digital assets from a plurality of users such that each transfer media 70 comprises as much digital information as can be written to transfer media 70.

Transfer media 70 can be sequentially linked with other transfer media 70 disposed at retailer 60 to accommodate a particularly busy retail location.

Preferably transfer media 70 is collected from retailer 60 each day, though other collection schedules are known to those skilled in the art. An order pickup receptacle or bag 72 is loaded with a collection of envelopes 64 along with transfer media 70. Since retailer 60 is not connected to a communications network, pickup bag 72 is picked up by a transport vehicle 74 such as a routine delivery vehicle. When transfer media 70 is collected, fresh transfer media 70 is placed in the transfer device to collect further user order requests.

Transport vehicle 74 delivers transport media 70 to a wholesale or processing laboratory operated by a service provider 80. Service provider 80 receives pickup bag 72 from transport vehicle 74. The contents of pickup bag 72 are registered with an operations computer 82 used for controlling the services provided by service provider 80 at the processing laboratory, such as film processing and digitizing 84, hardcopy print 85 fulfillment via digital printer 86, media writing via media writer 88 and return routing of a delivery bag 90 to retailer 60. In accordance with the present invention, operations computer 82 preferably further includes an order processing block 92, a kiosk database 94, a digitized image database 96, and a promotional database 98.

Order processing block 92 reads transfer media 70 and controls the appropriate resources to deliver the ordered products and/or services requested by the user. Kiosk database 94 comprises information associated with various image producing devices 10 which are serviced/supported by service provider 80. This information can include the location of the image producing devices 10, the scheduled delivery/pickup times, the current version of software that operates the image producing devices, the maintenance records and any other information useful in the operation of the image producing devices. This information associated with various image producing devices permits the user to access, track and/or change their order at any of the various image producing devices serviced/supported by service provider 80.

Digitized image database 96 comprises digital assets such as images, sound files and motion clips used in fulfilling a user order. Digitized image database 96 also receives digitized images from the film processing and digitizing block 84. Promotional database 98 comprises various promotions for deployment in various image producing devices serviced/supported by service provider 80.

Service provider 80 includes film processing and digitizing block 84 for the developing and scanning of film rolls which may be submitted as part of an order. This function is well known in the art and accordingly, further discussion is omitted. Film images digitized by block 84 are temporarily stored in digitized image database 96. If the user order includes hard copy prints, these are printed by digital printer 86 which can be a digital silver halide printer, a digital thermal dye transfer printer, a digital inkjet printer, or any other type of digital output device. Media writer 88 can be used to record digitized images from digitized image database 96 onto an update media 100. Update media is intended to be delivered by transport vehicle 74 to retailer 60, and preferably, loaded on imaging device 10. In this manner, large amounts of data are transferred between retailer 60 and service provider 80 without an expensive, high bandwidth network connection.

Update media may include information on pending orders or fulfilled orders. Update media 100 may include the latest promotions for delivery to service provider 80 and/or updates for the operating software of kiosk 10. Low or high resolution digital images can be returned to retailer 60 using update media 100.

Service provider 80 may further include a server 102 for communicating over a communication network 104. Such a communication network may provide an authorized third party to view and create orders from third party computers 106 located remote from retailer 60. A communications service provider 108 may be required to provide communication between service provider 80 and third party computer 106. In this manner, transfer media 70 is employed in transferring large quantities of digital assets to web sites for sharing with third parties without the need for a user or a retailer to have an expensive network connection.

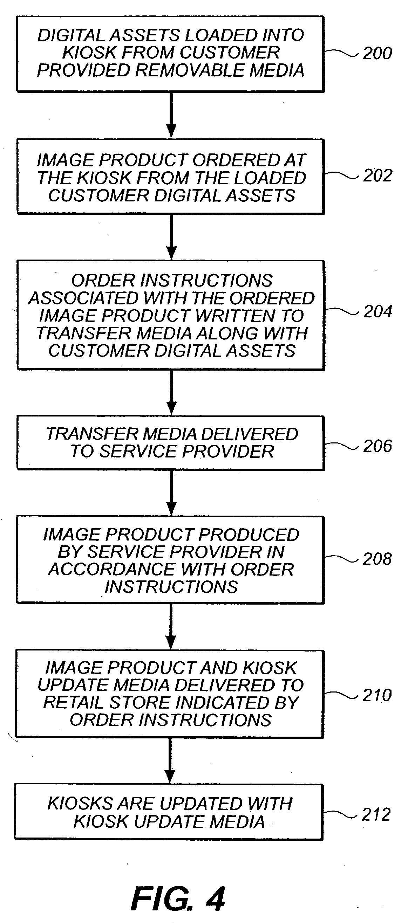

Referring now to Figure 4, there is provided a flow diagram of a method in accordance with the present invention which employs system 50. At step 200, the user loads/transfers digital assets (such as images, sound files, motion clips and/or preconfigured orders) onto imaging device 10 (also referred to as kiosk 10) from removable media 27. The user proceeds to use software operating on kiosk 10 to create an order request (step 202) for a product/service. The order request is transposed into order instructions that are used by service provider 80 to create the ordered product/service. Label 62 may be printed and affixed to envelope 64 and/or receipt 66 may be generated for the user. The order instructions are written to transfer media 70 along with the digital assets for delivery (step 204). Transfer media 70 is delivered to service provider 80 by transport vehicle 74 (step 206). Using the order instructions, service provider 80 produces (step 208) the ordered product/service. The resulting product/service is delivered as indicated in the order request (step 210), for example, to retailer 60, direct to the user, or to another designated location.

Delivered to retailer 60 in step 210 is update media 100 comprising retailer information. For example, update media 100 may include information on pending orders or fulfilled orders. Update media 100 may also be employed to update kiosk 10 (step 212) with the latest promotions that service provider 80 has an interest or an obligation to display. This method promotes daily updates of promotions that enable service provider 80 to address the needs of users, customers and retailers on a regional basis. Update media 100 can also be used to update the operating software of the kiosk 10 to add new features and/or fix operational problems.

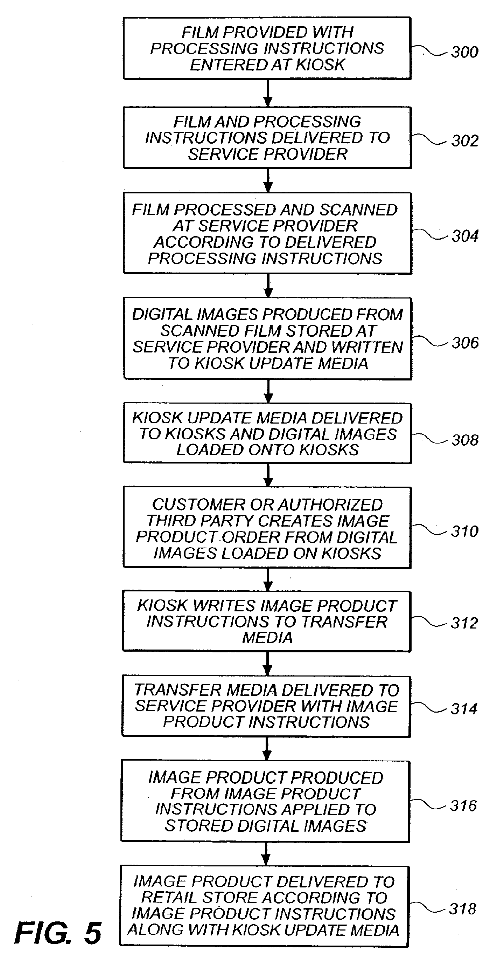

Figure 5 provides a flow diagram of another method in accordance with the present invention which employs system 50. In the method illustrated in Figure 5, at step 300, kiosk 10 accepts film roll 65 from a user along with an order request which is entered by the user interacting with software running on kiosk 10.
The order request can include requesting the scanning and digitizing of film roll 65 with the scanned images being returned via update media 100. After the film roll 65 and the order request is delivered to service provider 80 (step 302), service provider 80 processes film roll 65 and scans the processed images (step 304) producing digital images associated with the user that are then written to update media 100 (step 306). Update media 100 is delivered to retailer 60 by transport vehicle 74. After kiosk 10 has been updated with update media 100 (step 308), the user generates an order (step 310) for an image product/service employing the newly loaded user digital images. Order instructions are subsequently written (step 312) to transfer media 70 which is delivered (step 314) to service provider 80. Transfer media 70 instructs service provider 80 to produce the ordered image product/service (step 316). Once produced, the image product/service is delivered to retailer 60 along with update media 100 (step 318) as indicated by the order instructions.

In the method disclosed in Figure 5, the user's digital images which were scanned by service provider 80 were temporarily stored in anticipation of the user ordering an image product/service. Therefore, at step 312, transfer media 70 needs only to identify the digital images to be used in the ordered product/service as part of the order instructions. Thumbnails or low resolution versions of the user's digital images can be placed on transfer media 70.

As noted above, the ordered image product/service is returned along with update media 100 to retailer 60 as indicated by the order instructions (step 318). If the ordered image product/service was a gift (or paid for by another party), the retailer to which the image product/service is to be delivered can be different than the retailer from which the image product/service was ordered.

Note that update media 100 can be loaded onto more than one kiosk. Since service provider 80 is temporarily storing the high resolution digital images in digitized image database 96, every user order directed from various kiosks can be written to a single version of update media 100 and this single version can be distributed to all the kiosks being serviced/supported by service provider 80, thereby forming a parallel delivery network. Service provider 80 produces many copies of the same kiosk update media 100 and distributes them in parallel using routine delivery vehicle 74. In this manner, a user may drop off film roll 65 at a first kiosk located at a first location and create an order request at a second kiosk located at a second location. When the user provides the unique order identifier from order receipt 66 to a third party, they can also place image order request at yet another kiosk located at yet another location.

An identifier may be attached to the transfer media or the update media for order tracking. For example, if the transfer media or update media are CDs, the identifier could be machine-readable code written onto the CD. Alternatively, the identifier could be disposed on an adhesive labels. The identifier could include such information as retailer name, address, collection dates, delivery dates, and route information.

To ensure that no user order or images are lost, dual recording means can be provided for automatic file backup.

Messages on the display can be used to provide update information about the method, such as alert the retailer that an order request has been placed and that a delivery should be scheduled.

## Claims

1. An order processing method, comprising the steps of:
generating an order request for an image product using an imaging device located at a retail location, the order request associated with at least one digital image accessed by a user at the imaging device;
transferring the at least one digital image to a transportable transfer media; transporting the transportable transfer media from the retail location to a service fulfillment location located remotely from the retail location;
fulfilling the order request to produce the image product;
producing an update media; and
transporting the update media and the image product to the retail location.

2. The method of Claim 1, further comprising the step of transferring the order request to the transportable transfer media.

3. The method of Claim 1, wherein a plurality of order requests are generated in a predetermined time using the imaging device with each of the plurality of order requests being associated with a digital image accessed by the user at the imaging device, the method further comprising the steps of:
transferring the plurality of order requests to the transportable transfer media; and
transferring the plurality of associated digital images to the transportable transfer media.

4. The method of Claim 1, wherein the update media comprises retail information or software, and the method further comprises the step of transferring the retail information or software from the update media to the imaging device.

5. The method of Claim 1, wherein the update media is transported to a plurality of retail locations.

6. The method of Claim 1, further comprising the step of attaching an identifier to the transportable transfer media.

7. The method of Claim 1, further comprising the step of attaching an identifier to the update media.

8. An order processing method, comprising the steps of:
generating an order request for an image product using an imaging device located at a retail location, the order request associated with at least one digital image accessed by a user at the imaging device;
transferring the at least one digital image to a transportable transfer media; transporting the transportable transfer media from the retail location to a service fulfillment location located remotely from the retail location;
fulfilling the order request to produce the image product;
producing an update media;
transporting the update media to the retail location; and
transporting the image product to a location different than the retail location.

9. An order processing method, comprising the steps of:
transporting a photographic film roll from a retail location to a service fulfillment location located remotely from the retail location to produce at least one digital image associated with the photographic film roll;
generating an update media comprising the at least one digital image; transporting the update media to the retail location;
accessing the at least one digital image from the update media using an imaging device located at the retail location;
generating an order request for an image product using the imaging device, the order request associated with the at least one digital image; transferring the order request to a transportable transfer media; transporting the transportable transfer media from the retail location to the service fulfillment location; and
fulfilling the order request to produce the image product.

10. An order processing method, comprising the steps of:
transporting a photographic film roll from a retail location to a service fulfillment location located remotely from the retail location to produce at least one digital image associated with the photographic film roll;
generating an update media comprising the at least one digital image; transporting the update media to the retail location;
accessing the at least one digital image from the update media using an imaging device located at the retail location;
generating an order request for an image product using the imaging device, the order request associated with the at least one digital image; transferring the order request to a transportable transfer media; transporting the transportable transfer media from the retail location to the service fulfillment location;
fulfilling the order request to produce the image product;
producing a second update media; and
transporting the second update media and the image product to the retail location.
